(19) Europäisches Patentamt
European Patent Office
Office européen des brevets

(11) Veröffentlichungsnummer: **0 029 172**
**B1**

# (12) EUROPÄISCHE PATENTSCHRIFT

(45) Veröffentlichungstag der Patentschrift: **02.03.83**

(51) Int. Cl.³: **C 07 F 9/40,** D 06 M 13/26

(21) Anmeldenummer: **80106798.4**

(22) Anmeldetag: **05.11.80**

## (54) Alkanphosphonsäurehalbestersalze, ihre Herstellung und ihre Anwendung als Präparationsmittel für textile Fasern.

(30) Priorität: **14.11.79 DE 2945945**

(43) Veröffentlichungstag der Anmeldung: **27.05.81 Patentblatt 81/21**

(45) Bekanntmachung des Hinweises auf die Patenterteilung: **02.03.83 Patentblatt 83/9**

(84) Benannte Vertragsstaaten: **DE FR GB IT NL**

(56) Entgegenhaltungen:
**DE-A-2 256 835**
**DE-A-2 416 430**
**DE-A-2 610 763**
**DE-B-1 300 296**

**CHEMICAL ABSTRACTS, Band 87, Nr. 11, 12- September 1977, Seite 415 Zusammenfassung Nr. 91095v, Columbus, Ohio, US, R.V. DRONDINA et al.: ›Use of the Kuchera method for studying the adsorption of some flotation reagents on mercury‹**

(73) Patentinhaber: **HOECHST AKTIENGESELLSCHAFT, Postfach 80 03 20, D-6230 Frankfurt/Main 80 (DE)**

(72) Erfinder: **Kleber, Rolf, Dr., Am Trieb 41, D-6078 Neu-Isenburg (DE)**
Erfinder: **Wagemann, Wolfgang, Dr., Beektwiete 2a, D-2071 Tremsbüttel (DE)**
Erfinder: **Diery, Helmut, Dr., Theresenstrasse 45, D-6233 Kelkheim (Taunus) (DE)**
Erfinder: **Dürsch, Walter, Dr., In der Braubach 4, D-6240 Königstein/Taunus (DE)**
Erfinder: **Kleiner, Hans-Jerg, Dr., Altkönigstrasse 11a, D-6242 Kronberg/Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

# Alkanphosphonsäurehalbestersalze, ihre Herstellung und ihre Anwendung als Präparationsmittel für textile Fasern

Zu den Aufgaben eines Präparationsmittels zählt in erster Linie das Verleihen ausreichender Glätte beim Herstellen von Fasern sowie eine Reduzierung der statischen Aufladung. Bei modernen Verarbeitungstechnologien kommt es zu erheblichen thermischen Beanspruchungen der Präparation, so daß zusätzlich immer mehr die Thermostabilität von Präparationsmitteln in den Vordergrund rückt.

Das Präparieren von Fasern mit anionischen Verbindungen zwecks Reduzierung der statischen Aufladung ist gut bekannt. Phosphorsäureester, erhältlich durch Umsetzung von $P_2O_5$, Polyphosphorsäure oder $POCl_3$ mit Alkoholen, wie sie die US-PS 3 004 056 und 3 004 057 beschreibt, sind die bekanntesten Antistatika. Die dort beschriebenen Produkte weisen jedoch nur beschränkte Thermostabilität auf und enthalten meist anorganisches Phosphat, was erhebliche Reibungsprobleme mit sich bringt.

Die DE-PS 2 256 835 beschreibt thermostabile Halbester von Phosphonsäuren zum Präparieren von Synthesefasern. Die Produkte bereiten jedoch erhebliche Probleme in der Herstellung. Sie werden hergestellt durch radikalisch initiierte Umsetzung von langkettigen Olefinen mit Phosphiten. Dabei kann es zu Dimerisierungen des Olefins kommen, und die nachfolgende Verseifung zum Phosphonhalbester ist eine nur schwer zu kontrollierende Reaktion, so daß die Verbindungen trotz ausgezeichneter anwendungstechnischer Effekte nur schwer Eingang in die Praxis gefunden haben.

Überraschenderweise gelang es nun, zu präparativ leicht zugänglichen Phosphonsäurederivaten zu kommen, die sich gut als Präparationsmittel für Textilfasern eignen.

Gegenstand der Erfindung sind somit Alkanphosphonsäurehalbestersalze der Formel

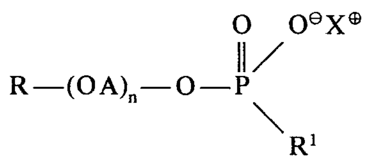

wobei

R geradkettiges oder verzweigtes Alkyl oder Alkenyl mit jeweils $C_6$–$C_{22}$, vorzugsweise $C_6$–$C_{16}$-C-Atomen,

$R^1$ $C_1$–$C_4$-Alkyl,

A eine Gruppe der Formel

$-CH_2CH_2-$ oder $-CH_2CHCH_3$

oder ein Gemisch derselben,

n eine Zahl von 0 bis 15, vorzugsweise 1 bis 15, insbesondere 1 bis 8, und

X ein Alkalimetall- oder Ammonium-Ion bedeutet, ausgenommen die Verbindung mit R = Dodecyl, n = 0, $R^1$ = Methyl und X = Na.

Gegenstand der Erfindung ist weiterhin die Verwendung von Alkanphosphonsäure-halbestersalzen der Formel

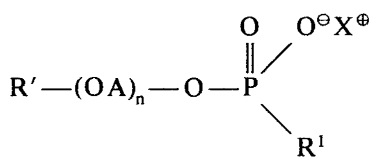

wobei

R' geradkettiges oder verzweigtes Alkyl oder Alkenyl mit jeweils $C_6$–$C_{22}$, vorzugsweise $C_6$–$C_{16}$-C-Atomen,

$R^1$ $C_1$–$C_4$-Alkyl,

A eine Gruppe der Formel

$-CH_2CH_2-$ oder $-CH_2CH-CH_3$

oder ein Gemisch derselben

n eine Zahl von 0 bis 15, vorzugsweise 0 bis 8, und

X ein Alkalimetall- oder Ammonium-Ion

bedeuten, als Präparationsmittel für textile Fasern.

Diese Alkanphosphonsäurehalbestersalze sind aus den entsprechenden Phosphonsäureanhydriden präparativ leicht zugänglich, indem man diese Anhydride der Formel $(R^1-PO_2)_x$ mit äquimolaren Mengen eines längerkettigen Alkohols oder einem Oxalkylat dieser Alkohole umsetzt (vgl. Houben–Weyl, Bd. XII/1, S. 413). Die oxalkylierten Alkohole können entweder nur mit Äthylenoxid oder Propylenoxid oder aber mit einem Gemisch beider Alkylenoxide oxalkyliert sein. Dementsprechend erhält man dann Produkte der obigen Formel, die gleichzeitig Äthylenoxid- und Propylenoxidgruppen enthalten. Die Reaktionstemperatur für die Alkoholyse der Phosphonsäureanhydride liegt bei 60–120°C, vorzugsweise 80–100°C, und als Lösungsmittel verwendet man indifferente Verbindungen wie aliphatische oder aromatische Kohlenwasserstoffe, Halogenkohlenwasserstoffe, oder höhere Ether, vorzugsweise arbeitet man jedoch ohne Lösungsmittel, wobei sich direkt die reinen Phosphonsäurehalbester bilden. Bei Verwendung eines Lösungsmittels können die reinen Ester durch Abdestillieren des Lösungsmittels gewonnen werden. Zur Herstellung der Salze werden die Alkanphosphonsäurehalbester in Substanz oder in wäßriger Suspension direkt mit dem entsprechenden Hydroxid bzw. dessen wäßriger Lösung neutralisiert. Man erhält auf diese Weise hochkonzentrierte, klarflüssige Lösungen. Die reinen Halbestersalze werden durch Abdestillieren des Wassers erhalten. Die als Ausgangsverbindungen dienenden Alkanphosphonsäureanhydride sind auf verschiedenen Wegen leicht zugänglich (vgl. Houben–Weyl, Bd. XII/1, S. 612, DE-OS 2 758 580; DE-OS 2 441 878).

Die Alkanphosphonsäurehalbestersalze sind hoch thermostabil und zeigen ausgeprägte Gleiteigenschaften sowie eine hohe Antistatic. Sie eignen sich deshalb gut als Präparationsmittel für textile Fasern. Die Produkte können allein oder auch in Kombination mit anderen Präparationsmitteln, wie z. B. Ester- oder Mineralölen, Fadenschlußmitteln, oxethylierten Alkoholen oder Fettsäuren, Emulgatoren, Silikonölen etc. eingesetzt werden. Die Auflage der Alkanphosphonestersalze liegt bei 0,02–1 Gew.-%, vorzugsweise bei 0,1–0,5 Gew.-% an wirksamer Substanz. Die Produkte können auf Endlosfäden oder Stapelfasern, auf Kabeln und Füllfasern aus Polyester, Polyamid, Polyacrylnitril, Polyolefinen sowie nativen und Regeneratcellulosefasern, Wolle oder Baumwolle beim Herstellen und in der textilen Weiterverarbeitung (Sekundärspinnereien) aufgebracht werden. Appliziert nach Färbevorgängen verleihen sie den ausgerüsteten Fäden oder Fasern gute Gleiteigenschaften, verbunden mit hoher antistatischer Wirksamkeit.

## Beispiel 1

0,4 Mol (62,3 g einer 68%igen Lösung) Propanphosphonsäureanhydrid werden mit 5 kg (0,4 Mol) 2-Ethyl-hexanol versetzt und auf 90°C erwärmt. Es wird 2 Stunden bei 90°C nachgerührt und mit 27 g einer 85%igen KOH-Lösung in 20 ml Wasser auf pH 7,0 gestellt.

Ausbeute: 159 g einer 86,4%igen Lösung des Propanphosphonsäuremono-2-ethylhexylester-Kaliumsalzes.

## Beispiel 2

197,6 g einer 68%igen Propanphosphonsäureanhydrid-Lösung (1,26 Mol) werden mit 174,8 g (1,2 Mol) einer Mischung aus 45 Gew.-% n-Octanol und 55 Gew.-% n-Decanol auf 90°C erhitzt und nach 2 Stunden auf 55°C abgekühlt. Dann werden 40 g Wasser zugegeben. Der pH-Wert des sauren Halbesters beträgt 0,3. Zur Einstellung auf pH 7,0 werden 115 g KOH (1,8 Mol) in 110 g Wasser zugegeben.

Ausbeute: 717 g eines 65%igen Propanphosphonsäuremono(octyl/decyl)-ester-Kaliumsalzes.

## Beispiel 3

114 g (0,54 Mol) einer 50%igen Methylenchlorid-Lösung von Propanphosphonsäureanhydrid werden mit 78,2 g (0,54 Mol) einer Mischung aus 45 Gew.-% n-Decanol und 55 Gew.-% n-Octanol am Rückfluß erwärmt und 2 Stunden lang unter Abdestillieren von $CH_2Cl_2$ gerührt. Es wird auf 75°C abgekühlt, 30 Minuten unter Vakuum (100 Torr) = 150 mbar gerührt und auf 30°C abgekühlt.

Der saure Ester wird in 40 g $H_2O$ suspendiert und mit 35,6 g (0,54 Mol) KOH in 40 g Wasser auf pH 7,0 eingestellt.

Ausbeute: 378 g einer 42%igen Lösung des Propanphosphonsäure-mono(decyl/octyl)-ester-Kaliumsalzes.

## Beispiel 4

In gleicher Weise wie in den Beispielen 1 bis 3 wurden dargestellt:

a) Ethanphosphonsäuremono-n-hexylester-Natriumsalz,

b) Ethanphosphonsäuremono-stearylester-Ammoniumsalz,
c) Ethanphosphonsäuremonoester-n-docosylester-Kaliumsalz.

Beispiel 5

Thermostabilität

1 g Produkt (W. S.) wird 1 Stunde auf 220°C erhitzt und der Verlust durch Verdampfen gravimetrisch bestimmt. Gleichzeitig wird die Vergilbung (Verkokung) gemessen.

a) $P_2O_5$-Ester von Laurylalkohol als Kaliumsalz nach US-PS 3 004 057 (Vergleich),
b) Octylphosphonsäure-mono-ethylester-Kaliumsalz nach DE-PS 2 256 835 (als Vergleich),
c) Beispiel 1 }
d) Beispiel 2 } erfindungsgemäß
e) Beispiel 3 }

| | | Verlust | Vergilbung[1]) |
|---|---|---|---|
| a) | Vergleich | 40% | 1100 |
| b) | Vergleich | 10% | 86 |
| c) | | 8% | 4 |
| d) | | 6% | 2 |
| e) | | 6% | 2 |

[1]) JFZ: Vergilbungsskala in Jodfarbzahlen (DIN 6162) gemessen im Anschluß an den Flüchtigkeitstest.

Dynamische und statische Reibung

Die Produkte a bis e sowie
f) Beispiel 4a }
g) Beispiel 4b } erfindungsgemäß
h) Beispiel 4c }

werden durch eine Zahnradpumpe aus wäßrigen Lösungen mit einer Auflage von ca. 0,7% auf Polyamid 6-Filament (dtex 220 f 32) aufgebracht und bei 90°C getrocknet. Die präparierten Fäden werden wie in der DE-OS 2 335 675 beschrieben auf ihre dynamische Reibung und analog DE-PS 2 518 124 auf ihre statische Reibung geprüft.

| | Gleitreibung (dynamische Reibung) | Haftreibung (statische Reibung) |
|---|---|---|
| a) | 0,25–0,34 | 1,0 |
| b) | 0,30–0,38 | 29,0 |
| c) | 0,24–0,32 | 5,0 |
| d) | 0,23–0,29 | 23,0 |
| e) | 0,21–0,27 | 24,0 |
| f) | 0,29–0,37 | 26,0 |
| g) | 0,21–0,26 | 19,0 |
| h) | 0,22–0,28 | 22,0 |

Die geprüften Produkte sind deutlich glätter als die Vergleichsprodukte a) und b), ihre Haftreibung ist nicht so niedrig, wie die des $P_2O_5$-Esters a), damit ist die Öffnungswilligkeit deutlich verbessert, während Vergleichsprodukt b) stark klebt und eine zu hohe Haftung aufweist.

Beispiel 6

In der in Beispiel 1 bis 3 beschriebenen Weise wurden hergestellt

a) Propanphosphonsäuremono-lauryltetraglykolester-Kaliumsalz,

b) Propanphosphonsäure-mono-$C_{12/14}$-Alkohol × 3 EO-ester-Kaliumsalz.

PES-Flocke wurde mit Lösungen dieser Verbindungen sowie der Verbindungen a und b aus Beispiel 5, Verbindung a aus Beispiel 4 und der Verbindungen aus Beispiel 1, 2 und 3 getränkt (0,5% WS-Auflage), bei 80°C getrocknet und 24 Stunden konditioniert.

Die Antistatikmessungen mit einem Textometer der Firma Mahlo GmbH, Saal/Donau, ergaben folgende Leitwerte, gemessen in Skalenteilen. Dabei entsprechen hohe Werte einem guten Antistatikeffekt.

| Beispiel | 30% r. F. | 65% r. F. |
|---|---|---|
| 5a) Vergleich | 60 | 90 |
| 5b) Vergleich | 90 | 98 |
| 1: | 91 | 102 |
| 2: | 90 | 101 |
| 3: | 89 | 102 |
| 4a) | 90 | 100 |
| 6a) | 95 | 105 |
| 6b) | 93 | 103 |

Die hohen Werte der Leitfähigkeit zeigen den guten Antistatikwert der Verbindungen, besonders bei nur 30% relativer Luftfeuchte.

**Patentansprüche**

1. Alkanphosphonsäurehalbestersalze der Formel

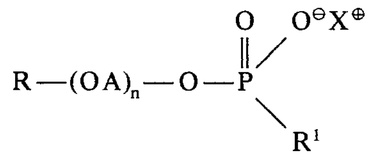

wobei
R geradkettiges oder verzweigtes Alkyl oder Alkenyl mit jeweils 6 bis 22 C-Atomen,
$R^1$ $C_1$–$C_4$-Alkyl,
A eine Gruppe der Formel

$$-CH_2CH_2- \quad \text{oder} \quad -CH_2CH-CH_3$$

oder ein Gemisch derselben,
n eine Zahl von 0 bis 15 und
X ein Alkalimetall- oder Ammonium-Ion
bedeutet, ausgenommen die Verbindung mit R = Dodecyl, n = 0, $R^1$ = Methyl und X = Na.

2. Alkanphosphonsäurehalbestersalze nach Anspruch 1, wobei R Alkyl oder Alkenyl mit jeweils 6 bis 16 C-Atomen und n eine Zahl von 1 bis 8 bedeuten.

3. Verfahren zur Herstellung der Alkanphosphonsäurehalbestersalze nach Anspruch 1, dadurch gekennzeichnet, daß man ein Phosphonsäureanhydrid der Formel $(R^1-PO_2)_x$ mit einem Alkohol der Formel $R-(OA)_n-OH$ umsetzt und den erhaltenen Alkanphosphonsäurehalbester mit einer basischen Alkalimetall- oder Ammoniumverbindung neutralisiert.

4. Verwendung von Alkanphosphonsäurehalbestersalzen der Formel

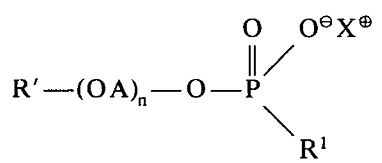

worin
R' geradkettiges oder verzweigtes Alkyl oder Alkenyl mit jeweils 6 bis 22 C-Atomen,
$R^1$ $C_1$–$C_4$-Alkyl,
A eine Gruppe der Formel

$$-CH_2CH_2- \quad \text{oder} \quad -CH_2CHCH_3$$

oder ein Gemisch derselben,
n eine Zahl von 0 bis 15 und
X ein Alkalimetall- oder Ammonium-Ion
bedeuten, als Präparationsmittel für textile Fasern.

**Claims**

1. Alkane phosphonic acid semiester salts of the formula

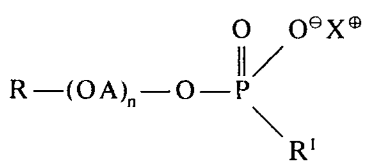

wherein
R is straight-chain or branched alkyl or alkenyl each having from 6 to 22 carbon atoms,
$R^1$ is $C_1$–$C_4$alkyl,

A is a group of the formula

$$—CH_2CH_2— \quad \text{or} \quad —CH_2CHCH_3$$

or a mixture of both

n is an integer of from 0 to 15, and

X is an alkali metal or ammonium ion, the compound

wherein R is dodecyl, n is 0, $R^1$ is methyl and X is Na being disclaimed.

2. Alkane phosphonic acid semiester salts according to claim 1 wherein R is alkyl or alkenyl each having from 6 to 16 carbon atoms and n is an integer from 1 to 8.

3. A process for the manufacture of the alkane phosphonic acid semiester salts according to claim 1, which comprises reacting a phosphonic acid anhydride of the formula $(R^1-PO_2)_x$ with an alcohol of the formula $R-(OA)_n-OH$ and neutralizing the alkane phosphonic acid semiester obtained with a basic alkali metal or an ammonium compound.

4. Method of use of alkane phosphonic acid semiester salts of the formula

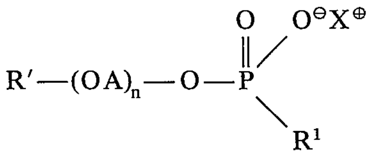

wherein

R' is straight-chain or branched alkyl or alkenyl each having from 6 to 22 carbon atoms,

$R^1$ is $C_1-C_4$alkyl,

A is a group of the formula

$$—CH_2CH_2— \quad \text{or} \quad —CH_2CHCH_3$$

or a mixture of both

n is an integer of from 0 to 15, and

X is an alkali metal or ammonium ion as preparation agents for textile fibers.

**Revendications**

1. Sels hémi-esters d'acides alcane-phosphoniques répondant à la formule:

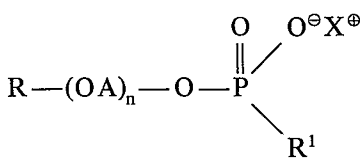

dans laquelle

R représente un radical alkyle ou alcényle, linéaire ou ramifié, contenant de 6 à 22 atomes de carbone,

$R^1$ représente un radical alkyle contenant de 1 à 4 atomes de carbone,

A représente un radical

$$—CH_2CH_2— \quad \text{ou} \quad —CH_2CH—CH_3$$

ou un mélange de ces radicaux,

n représente un nombre de 0 à 15, et

X représente un ion de métal alcalin ou d'ammonium,

sauf le composé pour lequel R représente un radical dodécyle, n est égal à 0, $R^1$ représente un radical méthyle en X représente Na.

2. Sels hémi-esters d'acides alcane-phosphoniques selon la revendication 1, dans lesquels R représente un radical alkyle ou un radical alcényle contenant chacun de 6 à 16 atomes de carbone et n représente un nombre de 1 à 8.

3. Procédé de préparation des sels hémi-esters d'acides alcane-phosphoniques selon la revendication 1, procédé caractérisé en ce qu'on fait réagir un anhydride phosphonique de formule $(R^1-PO_2)_x$ avec un alcool de formule $R-(OA)_n-OH$ et on neutralise l'hémi-esters d'acide alcane-phosphonique obtenu avec un composé basique de métal alcalin ou d'ammonium.

4. Application de sels hémi-esters d'acides alcane-phosphoniques répondant à la formule:

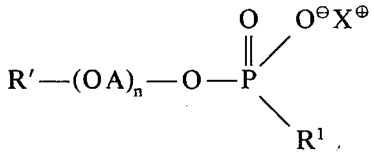

dans laquelle

$R'$ représente un radical alkyle ou alcényle, linéaire ou ramifié, contenant de 6 à 22 atomes de carbone,

$R^1$ représente un radical alkyle en $C_1-C_4$,

A représente un radical

$$-CH_2CH_2- \quad \text{ou} \quad -CH_2\underset{|}{C}HCH_3$$

ou un mélange de ces radicaux,

n représente un nombre de 0 à 15, et

X représente un ion de métal alcalin ou d'ammonium,

comme agents de préparation pour fibres textiles.